# EUROPEAN PATENT APPLICATION

(11) **EP 4 507 456 A1**
(43) Date of publication of application: **12.02.2025**
(21) Application number: 24193696.2
(22) Date of filing: 08.08.2024
(51) Int. Cl.: H05B 45/3575, H05B 45/50, H05B 47/20, B60Q 11/00, H02H 11/00, H02J 7/00

(54) **PILOT CIRCUIT FOR LAMPS, CORRESPONDING DEVICE AND PROCEDURE**

(30) Priority: 10.08.2023 IT 202300017136
(71) Applicant: OSRAM GmbH, 80807 München (DE); OSRAM S.P.A. - SOCIETA' RIUNITE OSRAM EDISON CLERICI, 20126 Milano (IT)
(72) Inventor: Deanna, Paolo, 31039 Vallà di Riese Pio X Treviso (IT)
(74) Representative: Impuls legal PartG mbB

(57) **Abstract**

A circuit (10) likely to facilitate the mounting of retrofit solid-state lamps in place of filament lamps comprises a first (X1) and second (X2) line configured to have an input signal (Vin) applied between them at an input of circuit (10) and to provide an output signal (Vout) to a solid-state light source (L) at an output of circuit (10). In the first (X1) and second (X2) lines, first switch circuitry (Q2, Q3) is provided to couple the output of circuit (10) to the input (10) in response to the fact that the first switch circuitry (Q2, Q3) is conductive. It is then provided second switch circuitry (Q4, Q5) to connect a dummy electrical load (105) between the first line (X1) and the second line (X2) as well as logic inversion circuitry (106A, 106B) arranged between the first (Q2, Q3) and the second (Q4, Q5) switch circuitry. The circuit is driven (110B) to start in response to the application of the input signal (Vin) while the output is decoupled from the circuit input (10) and the dummy electrical load (105) is connected between the first line (X1) and the second line (X2), applying a delay from startup in making the first switch circuitry (Q2, Q3) conductive with the output coupled to the input of circuit (10) so that the output signal (Vout) is supplied to the solid-state light source (L) while the dummy electrical load (105) is disconnected.

## Description

This application claims priority for Italian application IT102023000017136 dated August 10,2023, the disclousre of which is incorporated herein by reference in its entirety.

### Technical field

The description refers to lamp driving, for example, for diagnostic testing purposes.

One or more forms of implementation can be applied to LED lamps used for so-called retrofit or aftermarket, for example in the vehicular industry.

### Technology background

Many motor vehicles today are equipped with electronic systems capable of performing diagnostic tests on various vehicle components. Such systems may be associated with a central control unit of the vehicle electronics often referred to as a Body Control Module (BCM).

A BCM can be configured to carry out diagnostic tests inherent in lamp status and issue corresponding alerts.

Conventional bulbs (incandescent, i.e., filament) can undergo different diagnostic tests depending on the type and model of the vehicle.

For example, a first possible test is a DC current check: purpose of this diagnostic test is to check the integrity of the filament when the lamp is on (i.e., with the lamp energized). The lamp filament is classified as "failed" when the current consumption falls below a certain threshold (an indication that the filament is interrupted or damaged). The failure is indicated by the BCM unit on the control panel ("dashboard") of the vehicle.

Another possible test is a pulsed current check (also known as a cold lamp check-Cold Lamp Check, CLC): the purpose of this diagnostic test is to check the integrity of the filament with the lamp off (not powered); a burst of voltage pulses generated by the BCM unit (about 1-2ms duration and 100ms-500ms period) is applied to the lamp under test (trial). In a filament lamp, due to the high heat capacity of the cold lamp filament, the applied pulses fail to ignite the lamp. However, the pulsed current flowing through the cold filament is detected by the BCM unit or module and compared with a given threshold. The lamp filament is classified as "fault" when the detected current falls below a given threshold (interrupted or damaged filament). The failure is reported by the BCM unit on the vehicle control panel.

Solid-state retro-fit (retrofit) lamps, e.g., LEDs, are designed with a view to the possible direct replacement of conventional filament lamps (e.g., halogen) for both main headlamps and auxiliary lighting sources in the vehicle.

In areas of use such as, for example, the vehicular sector, LED retrofit lamps have achieved considerable success due to various reasons of advantage over traditional lamps or bulbs such as the quality of light emitted, long life and ease of installation.

However, LED retrofit lamps can engender compatibility problems with diagnostic tests: the installation of LED lamps as a retrofit to replace conventional filament lamps can cause diagnostic tests implemented by a BCM unit or module to fail to detect the lamp status correctly or be subject to glitches.

For example, in the case of a test with DC current control, the high efficiency of LED light output (number of lumens per watt) causes retrofit lamps to have low current draw. Therefore, the current draw may fall below the diagnostic threshold set by the BCM unit, so an untruthful fault message is issued.

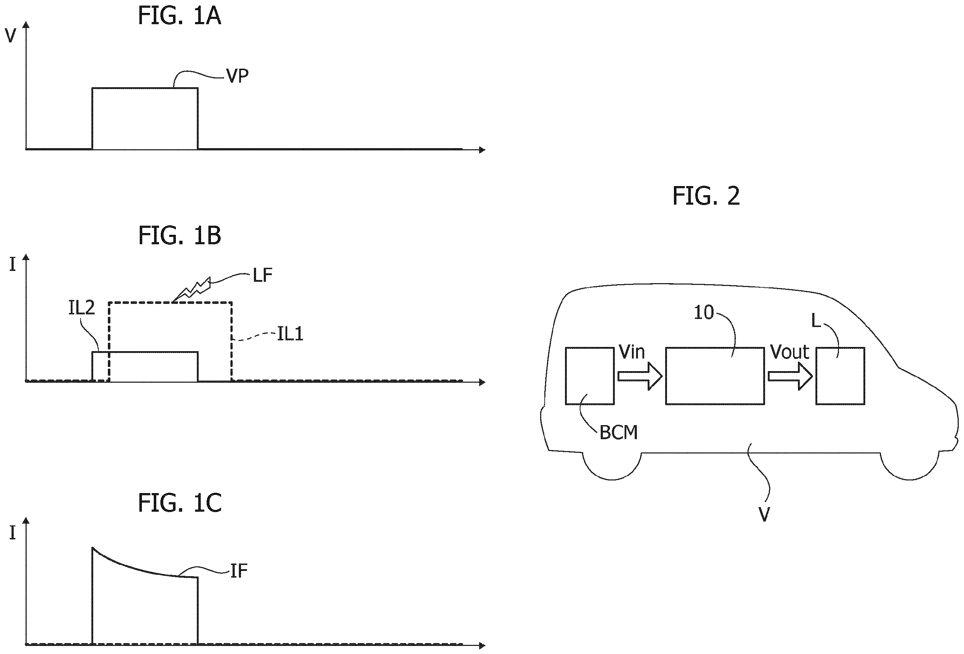

Figures 1A, 1B and 1C are time diagrams representing, with respect to a common time scale (abscissa t):
Figure 1A, possible trends of a VP voltage pulse (e.g., 12 - 15 V) applied to a lamp for an interval of duration in the case of a pulsed current check test (Cold Lamp Check, CLC); and
Figures 1B and 1C, possible trends of the current drawn by the lamp in the case of an LED lamp (IL1, IL2 curves in Figure 1B) and in the case of a filament lamp (IF curves in Figure 1C).

It is observed that an LED lamp has a high but short absorption peak due to the loading of the driver input capacitance, and Figure 1B highlights undesirable side effects that may occur in the case of an LED retrofit lamp.

First, in the case of a filament lamp, the test voltage pulse is unable to activate the lamp, meaning that there is no light emission. On the contrary, in view of the LED lamp's ignition time, which is much faster than in the case of filament or incandescent lamps, in the case of an LED lamp, there can be the emission of a flash of LF light (Figure 1B) that is visible.

In addition, in view of the significantly lower current drawn by the LED lamp compared with filament or incandescent lamps (IL2 curve in Figure 1B), and possible startup delays of the LED lamp driver, erroneous fault signaling may occur in the case of an LED lamp.

### Purpose and summary

One or more forms of implementation are intended to help overcome the drawbacks outlined above .

According to one or more forms of implementation, this purpose is achieved through a circuit having the characteristics recalled in the claims that follow.

One or more forms of implementation refer to a corresponding device and process.

The claims form an integral part of the technical teachings administered here in relation to forms of implementation.

One or more forms of implementation allow for a circuit that, when associated with a solid-state retrofit lamp (LED, for example), causes the test unit (BCM) to "see" the retrofit lamp as if it were a conventional filament lamp, so voltage pulses applied to the lamp during a "cold" test do not result in the lamp being ignited with unwanted flashing of light (see LF reference in Figure 1B). However, the pulsed current flowing through the cold filament is detectable by the BCM unit or module so that the test can be carried out properly.

One or more forms of implementation involve the use of a polarity-insensitive circuit capable of preventing the emission of erroneous fault messages and unwanted flickering of retrofit solid-state lamps subjected to a cold diagnostic test ("Cold Lamp Check") performed by a BCM unit without compromising the available voltage level on the lamp: an aspect, this, of importance, in the case of solid-state lamps such as LED lamps.

One or more forms of actuation avoid the need for a bridge rectifier followed by a power switch to connect and disconnect the lamp, possibly with an elevator converter to compensate for the voltage drop of the bridge rectifier.

One or more forms of implementation can be realized by resorting to a pair of power MOSFET transistors (N-channel, for example) driven by a single floating charge-pump driver.

One or more forms of actuation facilitate polarity-insensitive operation while resulting in reduced voltage losses. The use of two MOSFET transistors in place of a standard bridge rectifier allows for low voltage drops while maintaining polarity insensitivity.

### Brief description of the figures

One or more forms of implementation will now be described, by way of non-limiting example only, with reference to the attached figures, in which:
Figures 1A, 1B and 1C, representative of the performance of a pulsed current check (Cold Lamp Check, CLC) test on a lamp, have been discussed previously;
Figure 2 is a block diagram representing, in general terms, the criteria for conducting a test with pulsed current control on a solid-state lamp, e.g., LED;
Figures 3 and 4 illustrate possible circuit solutions conceivable to avoid the failure of such a test; and
Figure 5 and, in greater detail, Figure 6 illustrate circuit solutions according to forms of implementation of this description; and
Figures 7A and 7B illustrate forms of implementation of this description under different possible conditions of use.

It will be appreciated that, for clarity and ease of illustration, the various figures may not be represented at the same scale.

In addition, for brevity-unless the context indicates otherwise-similar parts or elements are indicated in the various figures with the same reference symbols without repeating a corresponding description for each figure.

### Detailed description

Various specific details are illustrated in the following description for the purpose of providing a thorough understanding of various examples of implementation forms according to the description. Implementation forms can be obtained without one or more of the specific details, or with other processes, components, materials, etc. In other cases, known structures, materials or operations are not illustrated or described in detail so that the various aspects of the implementation forms are not made unclear.

A reference to "a form of implementation" within this description is intended to indicate that a particular configuration, structure, or feature described in relation to the form of implementation is included in at least one form of implementation. Thus, phrases such as "in a form of implementation" that may occur in various places in this description do not necessarily refer to exactly the same form of implementation. Also, particular conformations, structures, or features may be combined in any appropriate way in one or more forms of implementation.

The references used here are provided simply for convenience and therefore do not define the scope of protection or the extent of the forms of implementation.

As noted above, in the various figures the same references are used to indicate corresponding parts or elements, without repeating for brevity the relevant description for each figure.

The block diagram in Figure 2 represents, in general terms, a system (which can be installed in a V vehicle, for example, a motor vehicle such as a passenger car) including:
a central control unit (Body Control Module, BCM) of the V-vehicle electronics, likely to generate Vin test signals (for example, a pulse burst of the type shown in Figure 1A) ;
An L-lamp intended for testing; and
a circuit 10 likely to apply a voltage Vout to lamp L so as to light it.

Neither the BCM central control unit, nor the L lamp intended to be tested are of necessity included in the actuation forms: the actuation forms described here therefore refer primarily to circuit 10 (definable as "cold lamp check module" - Cold Lamp Check Module or CLCM) intended to be connected (installed) between the BCM unit and the L lamp: for simplicity in the following we will refer to a single lamp, although circuits such as circuit 10 described here lend themselves to being used in conjunction with multiple lamps.

For what is of interest here, the BCM central control unit can be of any known type configured to carry out tests with pulsed current control (Cold Lamp Check, CLC) on the L-lamp, which makes it unnecessary to provide a more detailed description here.

So as mentioned above, the solution described here makes it possible to create a circuit that, associated (for example by a retrofit installer) with a test unit (BCM) included in the equipment of a vehicle such as a passenger car, causes such a test unit to "see" a retrofit lamp as if it were a conventional filament lamp, being able to apply voltage pulses to that (retrofit) lamp during a "cold" test that do not lead to lamp ignition with unwanted flashing of light or unwanted flickering.

All with such a test unit otherwise retaining the ability to detect the pulsed current flowing through the retrofit lamp so that the test can be carried out properly.

At least in some cases (when the size of the lamp permits, for example), the circuit in question can be integrated into the lamp resulting in a retrofit device that can be directly substituted for a traditional filament lamp.

It is hoped that a CLCM circuit as indicated by reference 10 will be able to meet the following requirements:
(a) absorb high current pulses (even of 2-3 A) for an interval of 2-3 ms after the Vin voltage has been applied by the BCM unit (avoiding erroneous detection of lamp L failure by the BCM unit);
b) keep the lamp L disconnected for the first 2-3 ms following the application of voltage by the BCM unit (preventing the lamp from flashing during the diagnostic test);
(c) have a reduced voltage drop (Vin - Vout) across circuit 10 (desirably less than 200 mV);
(d) ability to operate with both input polarities (with circuit 10 insensitive to polarity); and
(e) low cost, small size, minimized steady state (steady state) power losses.

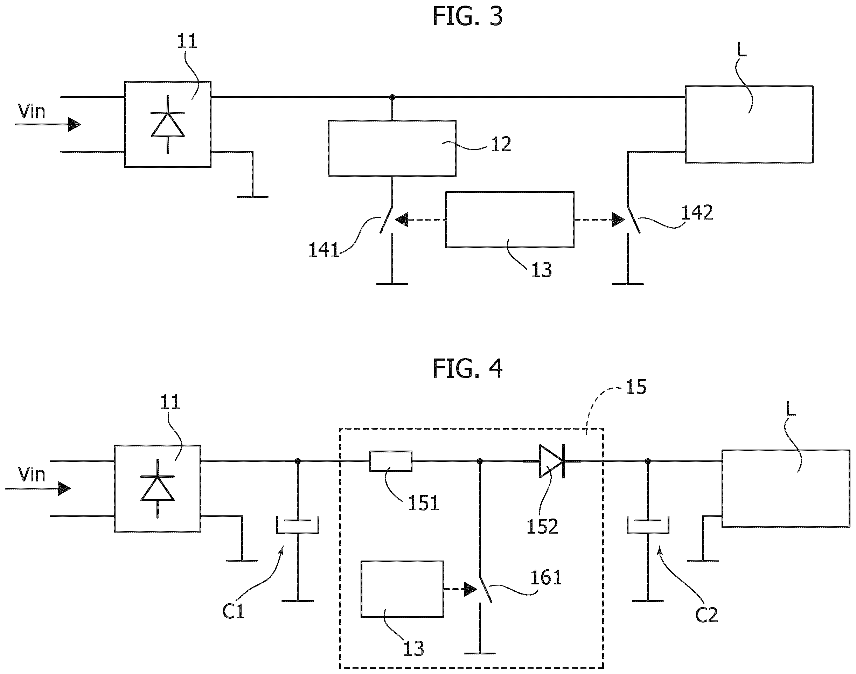

Figure 3 represents an initial circuit solution (not as claimed here) conceivable for making a CLCM circuit.

In the solution in Figure 3, the Vin signal is applied to a rectifier bridge 11 that transfers it to a dummy load 12.

A control logic 13 pilot:
A first switch 141 that, when conductive, grounds the dummy load terminal 12 opposite the terminal configured to receive the rectifier bridge signal 11; and
a second switch 142 that, when conductive, grounds the lamp terminal L opposite the terminal configured to receive the signal from rectifier bridge 11 (with dummy load 12 interposed) .

Of the requirements (a) to (e) outlined above, the solution in Figure 3 satisfies requirement (a) of absorbing high current pulses (via the first switch 141 and the dummy load 12), requirement (b) (via the second switch 142), and requirement (d) by being able to operate with both input polarities (due to the rectifier bridge 11).

However, the solution in Figure 3 does not meet requirement (c) for the voltage drop at the ends of the bridge rectifier 11, nor requirement (e), given the power losses on the rectifier bridge.

Figure 4 represents a second circuit solution (again, not as claimed here) conceivable for making a CLCM circuit.

In the solution in Figure 4, the Vin signal is once again applied to a rectifier bridge 11 that transfers it to the ends of a first capacitor C1.

The signal at the ends of the first capacitor C1 is transferred to the ends of a second capacitor C2, which applies it to lamp L.

Signal transfer from the first capacitor C1 to the second capacitor C2 is accomplished by a step-up converter 15 here represented by the series connection of an inductor 151 and a diode 152 with a switch 161 driven by a control logic 13.

When conductive, switch 161 grounds the terminal of inductor 151 opposite the first capacitor C1 and the terminal (anode) of diode 152 opposite the second capacitor C2.

Of requirements (a) to (e) outlined above, the solution in Figure 4 satisfies requirement (a) of absorbing high current pulses (via the first capacitor C1), requirement (c) of having a low voltage drop (due to step-up converter 15), and requirement (d) being able to operate with both input polarities (due to rectifier bridge 11).

However, the solution in Figure 4 does not meet requirement (b) of keeping the L lamp disconnected immediately for the first few moments after the BCM unit applies voltage, nor does it meet requirement (e), given the circuit complexities, generation of radio frequency noise (EMI noise) and high power losses. In addition, the solution in Figure 4 uses components (the first capacitor C1 and the inductor 151) that have non-negligible dimensions.

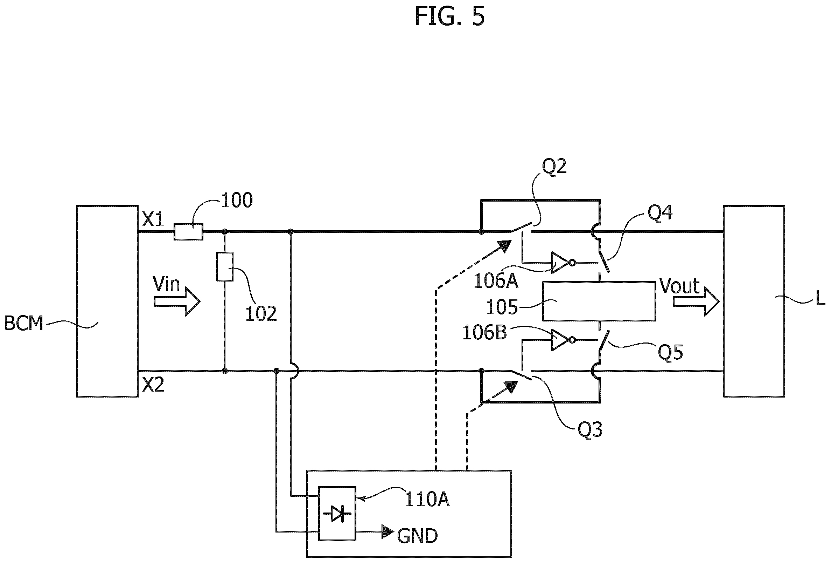

Figure 5 and following illustrate a circuit solution that can be used to carry out a test with pulsed current control on a solid-state L-lamp, e.g., LED, according to forms of implementation of this description.

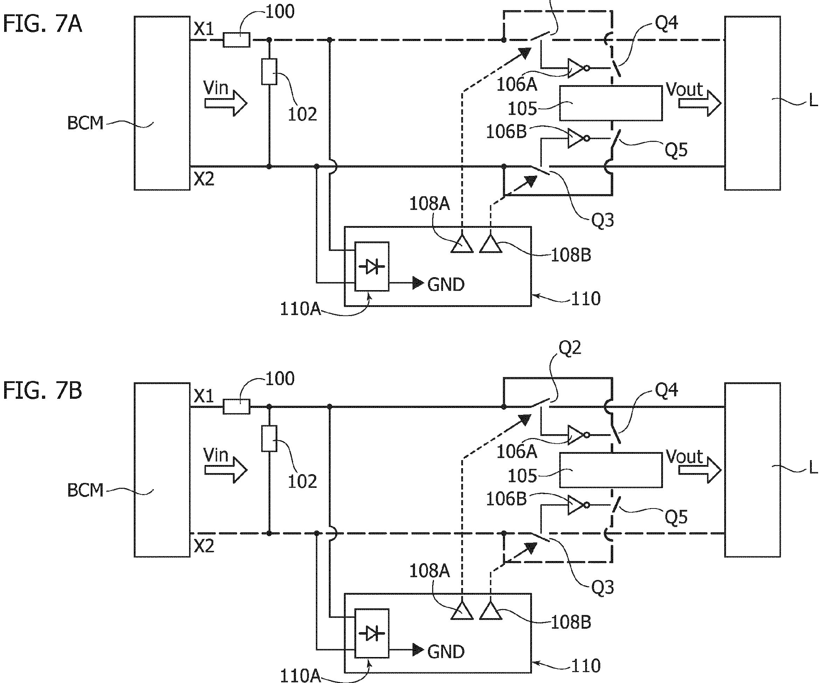

In such figures:
power current paths, intended to carry currents of a certain magnitude, are represented with thick lines (possibly in strokes in Figures 7A and 7B), and
Low-power or "signal" current paths, intended to carry small currents and signals, are represented with thin lines.

Thinly dashed lines, on the other hand, indicate "floating" control of the control terminals (e.g., gates) of certain transistors, as described below.

Again, for brevity, corresponding parts or elements are referred to in the various figures with the same references, without repeating the relevant description for each figure. Again for brevity, the same reference can be used to indicate as much a node or line as a signal that recurs on that node or line.

Parts or elements already described with reference to Figures 1 to 4 will therefore not be described again with reference to Figures 5 and later.

These figures again illustrate a system of the type presented in general terms in Figure 2, comprising:
a central control unit (Body Control Module, BCM) of a V-vehicle's electronics operating according to criteria per se known to engineers in the field and likely to generate a Vin signal;
A solid-state L lamp (LED, for example) intended to be tested by the application of a Vout signal; and
a circuit 10 (definable as "cold lamp check module" - Cold Lamp Check Module or CLCM) configured so that it can "decide" to turn on or turn off lamp L based on the stimuli it receives from the BCM unit.

It will be noted again that neither the BCM central control unit nor the L-lamp intended for testing are of necessity included in the implementation forms.

As noted above, a cold lamp test module such as Circuit 10 can be associated (for example, by a retrofit installer) with a test unit (already) included in the equipment of a V-vehicle such as a passenger car to make such a test unit "see" a retrofit lamp as if it were a conventional filament lamp, by being able to apply voltage pulses to such a (retrofit) lamp during a "cold" test that do not result in the lamp lighting up with unwanted flashing of light or unwanted flickering.

At least in some cases (when the size of the lamp permits, for example), the circuit in question can be integrated into the lamp resulting in a retrofit device that can be directly substituted for a traditional filament lamp.

In the system of Figures 5 and following, the BCM unit applies the Vin signal between two "power" lines X1, X2 to which a protection fuse 100 and a bidirectional transient voltage suppressor (TVS) 102 are advantageously associated.

The signal between lines X1, X2 is sensed by a MOSFET 110 driver module, referenced to GND ground, to which the control terminals (gates, in the case of field-effect transistors such as MOSFETs) of two transistors Q2 and Q3 acting as electronic switches interposed on lines X1, X2 so that:
With switches Q2, Q3 conductive ("on"), lines X1, X2 transfer voltage Vin as voltage Vout to the ends of lamp L; and
With switches Q2, Q3 non-conductive ("off"), lines X1, X2 are interrupted, so there is no Vin voltage transfer to lamp L.

Reference 105 denotes a dummy load configured to be connected to lines X1, X2 via two additional transistors Q4 and Q5 acting as electronic switches whose control terminals (gates, in the case of field-effect transistors such as MOSFETs) are driven with a complementary logic to that of transistors Q2 and Q3, as ideally represented by logic inverters 106A, 106B in Figures 5 and 7A, 7B.

With switches Q4, Q5 conductive ("on"), the dummy load 105 is connected to lines X1, X2 and can therefore "mimic", with respect to the BCM unit, the cold filament of a filament lamp. At the same time, with non-conductive switches Q2, Q3 ("off"), there is no transfer of Vin voltage to lamp L, thus avoiding the unwanted emission of light pulses or unwanted flickering.

Then (as further described below) switches Q2, Q3 can be made conductive ("on") to transfer, as a Vout signal, the Vin signal to lamp L.

This is both in order to complete the "cold" test and to turn on (in a desired manner) the lamp.

Switches Q4, Q5 (driven with a complementary logic to that of switches Q2 and Q3) are then nonconductive ("off") and the dummy load 105 is decoupled from lines X1, X2, avoiding unwanted power losses.

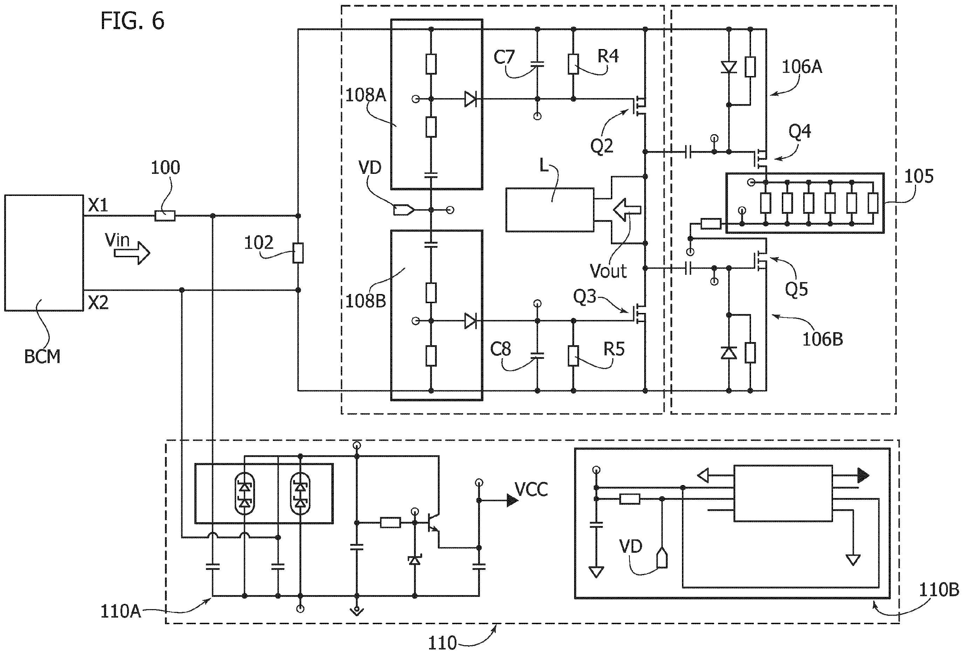

Figure 6 shows for completeness of description a possible example of a circuit that realizes the diagram in Figure 5.

In summary, such a schematic illustrates as an example a circuit 10 comprising a first line X1 and a second line X2 configured to have an input voltage Vin applied between them at an input of circuit 10 and to provide an output voltage Vout to a solid-state light source L (e.g., an LED retrofit lamp) coupled between them at an output of circuit 10.

Switches Q2, Q3 are thus illustrative of a first switch circuitry arranged in the first and second lines X1, X2 so the output of circuit 10:
is coupled to the input of circuit 10 in response to the fact that such first switch circuitry Q2, Q3 is conductive, and
is decoupled from the input of circuit 10 in response to the fact that such first switch circuitry Q2, Q3 is non-conductive.

Switches Q4, Q5 are illustrative of second switch circuitry configured to connect the dummy electrical load 105 between the first line X1 and the second line X2 in response to the fact that the second switch circuitry Q4, Q5 is conductive, while the dummy electrical load 105 is disconnected (from the first line X1 and the second line X2) in response to the fact that the second switch circuitry Q4, Q5 is nonconductive.

Inverters 106A, 106B are illustrative of logic inversion circuitry acting between the first switch circuitry Q2, Q3 and the second switch circuitry Q4, Q5 whereby the second switch circuitry Q4, Q5 is made non-conductive in response to the fact that the first switch circuitry Q2, Q3 is made conductive.

In addition to the various components already described (particularly MOSFET switches Q2, Q3, Q4 and Q5 and their bias and connection networks), the circuit diagram in Figure 6 also shows:
Two charge pumps 108A, 108B acting between lines X1, X2 and the control terminals of switches Q2 and Q3 (gate, in the case where the two switches in question are realized by field-effect transistors such as MOSFETs); and
a 110 network to drive switches Q2, Q3 with power-on delay generation comprising a 110A diode rectifier bridge (referenced to GND ground) coupled at the input to lines X1, X2 and configured to generate a DC supply voltage VCC for the circuit assembly, as well as a 110B square-wave generator generating a VD drive signal intended to be applied to switches Q2 and Q3 (via charge pumps 108A, 108B) at the VD node.

As still recalled below, the turn-on delay is generated by capacitors C7 and C8, with a charge-pump driver supplying charge current to these capacitors C7 and C8.

Such drive circuitry is configured to:
the startup in response to the application of Vin voltage to the input of circuit 10 with the output of the circuit decoupled from the input of circuit 10 itself and the dummy electrical load 105 connected between the first line X1 and the second line X2 in response to the fact that the first switch circuitry Q2, Q3 is nonconductive and the second switch circuitry Q4, Q5 conductive, and
apply a delay (given by elements C7 and C8 discussed below) from startup in making the first switch circuitry Q2, Q3 conductive, so that the output of circuit 10 is coupled to the input of circuit 10 with the output voltage Vout supplied to the solid-state light source L and the dummy electrical load 105 disconnected in response to the fact that the first switch circuitry Q2, Q3 is conductive and the second switch circuitry Q4, Q5 nonconductive.

As mentioned above, the square wave generator 110B generates a VD drive signal intended to be applied to switches Q2 and Q3 (via charge pumps 108A, 108B) at the VD node.

Advantageously, the 110B generator is a square-wave generator with a frequency that can range from a few kHz up to a few MHz, with such square-wave driving likely to form the heart of the charge pump system, as the VD signal is a square wave driving the 108A and 108B charge pumps.

The circuit diagram in Figure 6 further exemplifies the fact that:
the first switch circuitry includes a first switch (the MOSFET Q2, for example) arranged in the first line X1 between the input and output of circuit 10 and a second switch (the MOSFET Q3, for example) arranged in the second line X2 between the input and output of circuit 10
the driver circuitry (elements 110B; 108A, 108B; R4, C7, R5, C8, in the example considered here) is configured to make both the first switch Q2 and the second switch Q3 simultaneously conductive and nonconductive: i.e., when the first switch Q2 is conductive, the second switch Q3 is also conductive, and when the first switch Q2 is nonconductive, the second switch Q3 is also nonconductive.

The circuit diagram in Figure 6 further exemplifies that the drive circuitry includes charge pump circuitry 108A, 108B configured to provide floating voltage drive of the first switch circuitry Q2, Q3, specifically with:
A first 108A charge pump arranged between the first line X1 and a driver node VD to provide floating voltage drive of the first switch Q2 in the first switch circuitry Q2, Q3; and
a second charge pump 108B arranged between the driver node VD and the second line X2 to provide floating voltage drive of the second switch (Q2) in the first switch circuitry Q2, Q3.

The circuit diagram in Figure 6 again exemplifies the fact that the driver circuitry (e.g., elements 110B; 108A, 108B; R4, C7, R5, C8) are configured to start in response to the fact that the input signal Vin is applied to the input of circuit 10 with the output decoupled from the input of the circuit while the dummy electrical load 105 is connected between the first line X1 and the second line X2 because the first switch circuitry Q2, Q3 is nonconductive and the second switch circuitry Q4, Q5 conductive.

This is with the drive circuitry configured to apply (thanks to capacitances C7 and C8 charged by the current from the drive system comprising oscillator 110B and charge pumps 108A and 108B) a delay from startup--of 2-3 ms, for example--in making the first switch circuitry Q2, Q3 conductive, arriving (with such a delay applied) at the condition in which the output of the circuit is coupled to the input of circuit 10 with the output voltage Vout supplied to said solid-state light source L and the dummy electrical load 105 disconnected from lines X1 and X2 in response to the fact that the first switch circuitry Q2, Q3 is conductive while (due to the effect of inverters 106A, 106B) the second switch circuitry (Q4, Q5) is nonconductive.

Specifically, the circuit diagram in Figure 6 exemplifies the fact that the driver circuitry can include at least one delay network (essentially capacitors C7 and C8) to apply the aforementioned delay in making the first switch circuitry Q2, Q3 conductive (and the second circuitry Q4, Q5 non-conductive).

It will be appreciated that resistors R4 and R5 visible in the schematic in Figure 6 are used to discharge capacitors C7 and C8 when switching off switches (MOSFETs) Q2 and Q3.

In detail, the circuit diagram in Figure 6 exemplifies the fact the driver circuitry may include:
A first delay element C7 between the first line X1 and a control terminal (e.g., gate, in the case of a MOSFET) of the first switch Q1 in the first switch circuitry; and
a second delay element C8 (e.g., the same as the first) between the second line X2 and a control terminal (e.g., gate, in the case of a MOSFET) of the second switch Q2 in the first switch circuitry Q2, Q3.

From the circuit diagram in Figure 6, it is still seen that, in the examples presented here (which are such), the second switch circuitry Q4, Q5 may include a first switch Q4 arranged between the first line X1 and the dummy electrical load 105 and a second switch Q5 arranged between the dummy electrical load 105 and the second line X2.

In conventional mode, the BCM unit is designed to control every single lamp in the car.

Most of the time the lamp connector is not polarized; even in mechanically polarized connectors the electrical polarity is not standardized.

Since the polarity is not fixed or standardized, they are to be taken into account:
both situations in which line X1 and line X2 represent "+" and "-" polarities, respectively;
either situations in which line X1 and line X2 represent "-" and "+" polarities, respectively.

Due to the presence of the 110A rectifier, the GND reference ground of the MOSFET driver logic is always connected to the GND pole.

The solution described here is configured to support two possible piloting scenarios:
Figure 7A - line X1 = positive pole (thick line in strokes) and line X2 = negative pole;
Figure 7B - line X1 = negative pole and line X2 = positive pole (thick line in strokes).

The two switches Q2 and Q3 are referred to different voltages but are being driven simultaneously.

High-frequency square wave oscillator 110B is used to generate floating voltage by charge pumps 108A, 108B.

The use of a charge-pump scheme enables the driver to control even nonground-referenced switches such as Q2 and Q3 as well as to generate a power-on delay of 2-3 ms via capacitors C7 and C8 arranged between charge pumps 108A, 108B and switches Q2 and Q3.

As illustrated, capacitors C7 and C8 are connected (remember that resistors R4, R5 in parallel with capacitors C7 and C8 are used to discharge capacitors C7 and C8 when switching off switches Q2 and Q3):
capacitor C7, between line X1 and the control terminal (gate in the case of a field-effect transistor such as a MOSFET) of switch Q2, and
capacitor C8, between the control terminal (gate in the case of a field-effect transistor such as a MOSFET) of switch Q3 and line X2.

When the supply voltage is applied to the circuit, switches Q4 and Q5 are closed ("on") and instantly connect dummy load 105 to lines X1, X2.

Under such conditions, the dummy load 105 connected to lines X1, X2 can therefore "mimic" toward the BCM unit the cold filament of a filament lamp. At the same time, with non-conductive ("off") switches Q2, Q3, there is no transfer of Vin voltage to lamp L: this counteracts unwanted light pulses or unwanted flickering.

As best appreciated from the circuit diagram in Figure 6, switches Q4 and Q5 are controlled by switches Q2 and Q3, so when switches Q2 and Q3 are activated (via the VD signal generated by oscillator 110B and applied to charge pumps 108A, 108B, with a delay related to the charging time of capacitors C7 and C8) the dummy load 105 is disconnected from the power supply lines X1, X2 while switches Q2, Q3, being conductive ("on") are able to transfer, as voltage Vout, the voltage Vin to lamp L.

This facilitates both the completion of the "cold" test (carried out by the BCM unit according to criteria per se known to engineers in the field) and to ignite (in a desired manner) the lamp.

The fact that, under such conditions, switches Q4, Q5 are non-conductive ("off") with the dummy load 105 decoupled from lines X1, X2, avoids unwanted power losses.

In this regard, it will be noted that no components such as diodes (from a rectifier bridge, for example: see reference 11 in Figures 3 and 4) are present in the Vin >>>> Vout signal path. The voltage drop (Vout - Vin) can therefore be of reduced value as required by the end application against proper selection of the two switches Q2 and Q3 (e.g., N-channel power MOSFETs).

A circuit as exemplified here in Figures 5 to 7B can satisfy all points (a) to (e) referred to earlier:
(a)-switches Q4, Q5 and dummy load 105 are also compatible with a rather high current pulse, and dummy load 105 is disconnected from the supply voltage Vin when switches Q2 and Q3 are conductive ("on"), with switches Q4 and Q5 are automatically off("off");
(b)- switches Q2 and Q3 are able to keep lamp L disconnected from Vin supply voltage for 2-3 ms after the system is activated ("power up");
(c)-the supply current to lamp L flows only through fuse 101 and switches Q2, Q3, thus with a voltage drop (Vin - Vout) likely to be (greatly) reduced by a suitable choice of switches Q2, Q3 (N-MOS, for example);
(d)-the symmetry of the circuit allows operation in the opposite polarities (Figure 7A and Figure 7B), without the need for a power rectifier bridge;
(e)-the size can be reduced because the proposed circuit has very low power losses; the circuit can be made using low-cost components.

Without prejudice to the underlying principles, the details of implementation and the forms of implementation may vary, even significantly, from what is illustrated here by way of non-limiting example only, without departing from the scope of protection.

This scope of protection is determined by the attached claims.

### LIST OF REFERENCES

| | |
|---|---|
| Pulse voltage | VP |
| Solid state lamp current | IL1, IL2 |
| Current filament lamp | IF |
| Vehicle | V |
| Unitcontrol | BCM |
| Circuit | 10 |
| Lamp | L |
| Input signal (voltage) | Vin |
| Output signal (voltage) | Vout |
| Rectifier | 11 |
| Notional load | 12 |
| Control logic | 13 |
| Switch | 141, 142 |
| Capacitors | C1, C2 |
| Step-up converter15 | 15, 151, 152 |
| Fuse | 100 |
| Voltage transient suppressor (TVS) | 102 |
| First switch circuitry (MOSFET) | Q2, Q3 |
| Second switch circuitry (MOSFET) | Q4, Q5 |
| Notional load | 105 |
| Logic reversal circuitry | 106A, 106B |
| Charge pumps | 108A, 108B |
| Rectifier bridge (DC power supply) | 110A |
| Supply voltage | VCC |
| Ground | GND |
| Square wave generator | 110B |
| Node/pilot voltage | VD |
| RC nets delay | C7, C8 |
| Resistors | R4, R5 |

## Claims

1. Circuit (10), comprising:
a first line (X1) and a second line (X2) configured to have an input signal (Vin) applied between them at an input of circuit (10) and to provide an output signal (Vout) to a solid-state light source (L) coupled between them at an output of circuit (10),
first switch circuitry (Q2, Q3) arranged in the first (X1) and second line (X2) in which the output of circuit (10) is coupled to the input of circuit (10) in response to the fact that the first switch circuitry (Q2, Q3) is conductive,
second switch circuitry (Q4, Q5) configured to connect a dummy electrical load (105) between the first line (X1) and the second line (X2) in response to the fact that the second switch circuitry (Q4, Q5) is conductive,
Logic reversal circuitry (106A, 106B) between the first switch circuitry (Q2, Q3) and the second switch circuitry (Q4, Q5), in which the second switch circuitry (Q4, Q5) is non-conductive in response to the fact that the first switch circuitry (Q2, Q3) is conductive; and
Drive circuitry (110B; 108A, 108B; R4, C7, R5, C8) configured for:
the start in response to said input signal (Vin) applied to the input of circuit (10) with the output of circuit (10) decoupled from the input of circuit (10) and the dummy electrical load (105) connected between the first line (X1) and the second line (X2) in response to the fact that the first switch circuitry (Q2, Q3) is non-conductive and the second switch circuitry (Q4, Q5) conductive, and
apply a delay (C7; C8) from startup in making the first switch circuitry (Q2, Q3) conductive, in which the output of circuit (10) is coupled to the input of circuit (10) with said output signal (Vout) supplied to said solid-state light source (L) and said dummy electrical load (105) disconnected in response to the fact that the first switch circuitry (Q2, Q3) is conductive and the second switch circuitry (Q4, Q5) non-conductive.

2. Circuit (10) according to claim 1, in which:
The first switch circuitry (Q2, Q3) includes a first switch (Q2) arranged in the first line (X1) between circuit input (10) and circuit output (10) and a second switch (Q3) arranged in the second line (X2) between circuit input (10) and circuit output (10); and
the driver circuitry (110B; 108A, 108B; R4, C7, R5, C8) is configured to make both the first switch (Q2) and the second switch (Q3) conductive and nonconductive simultaneously.

3. Circuit (10) according to claim 1 or claim 2, in which the drive circuitry (110B; 108A, 108B; R4, C7, R5, C8) includes charge pump circuitry (108A, 108B) configured to provide floating drive of the first switch circuitry (Q2, Q3).

4. Circuit (10) according to claim 2 and claim 3, in which the driving circuitry (110B; 108A, 108B; R4, C7, R5, C8) includes:
A first charge pump (108A) arranged between the first line (X1) and a pilot node (VD) to provide floating drive of the first switch (Q2) in the first switch circuitry (Q2, Q3); and
a second charge pump (108B) arranged between the driver node (VD) and the second line (X2) to provide floating drive of the second switch (Q3) in the first switch circuitry (Q2, Q3).

5. Circuit (10) according to claim 3 or claim 4, in which the driving circuitry includes a square wave generator (110B) configured to drive the charge pump circuitry (108A, 108B)

6. Circuit (10) according to any of the preceding claims, wherein the driving circuitry (110B; 108A, 108B; R4, C7, R5, C8) includes at least one delay element (C7, C8) for applying said delay in making conductive the first switch circuitry (Q2, Q3) with, preferably:
A first delay element (C7) between the first line (X1) and a control terminal of the first switch (Q2) in the first switch circuitry (Q2, Q3); and
A second delay element (C8) between the second line (X2) and a control terminal of the second switch (Q3) in the first switch circuitry (Q2, Q3).

7. Circuit (10) according to any of the preceding claims, wherein the second switch circuitry (Q4, Q5) comprises a first switch (Q4) arranged between the first line (X1) and the dummy electrical load (105) and a second switch (Q5) arranged between the dummy electrical load (105) and the second line (X2).

8. Circuit (10) according to any of the preceding claims, in which the first (Q2, Q3) and second (Q4, Q5) switch circuitry include electronic switches (Q2, Q3, Q4, Q5) such as MOSFET transistors, preferably N-MOS transistors.

9. Device, comprising:
A circuit (10) according to any of claims 1 to 8, and
a solid-state light radiation source (L), preferably an LED light radiation source (L), coupled to the output of circuit (10) to receive from it said output signal (Vout).

10. A Method for providing an output signal (Vout) to a solid-state light source (L) coupled between a first line (X1) and a second line (X2) at an output of circuit (10) in response to an input signal (Vin) applied between the first line (X1) and a second line (X2) at an input of circuit (10), in which the procedure includes:
Configuring the output of circuit (10) to be coupled to the input of circuit (10) in response to the fact that the first switch circuitry (Q2, Q3) arranged in the first (X1) and second line (X2) is conductive,
configuring a dummy electrical load (105) to be connected between the first line (X1) and the second line (X2) in response to the fact that the second switch circuitry (Q4, Q5) is conductive,
configuring the second switch circuitry (Q4, Q5) to be nonconductive in response to the fact that the first switch circuitry (Q2, Q3) is conductive via logic inversion circuitry (106A, 106B) between the first switch circuitry (Q2, Q3) and the second switch circuitry (Q4, Q5),
In which the proceedings include:
The initiation of operation in response to said input signal (Vin) applied to the input of circuit (10) with the output of circuit (10) decoupled from the input of circuit (10) and the dummy electrical load (105) connected between the first line (X1) and the second line (X2) in response to the fact that the first switch circuitry (Q2, Q3) is non-conductive and the second switch circuitry (Q4, Q5) conductive, and
applying a delay (C7; C8) from startup in making the first switch circuitry (Q2, Q3) conductive in which the output of circuit (10) is coupled to the input of circuit (10) with said output signal (Vout) supplied to said solid-state light source (L) and said dummy electrical load (105) disconnected in response to the fact that the first switch circuitry (Q2, Q3) is conductive and the second switch circuitry (Q4, Q5) nonconductive.
